# EUROPEAN PATENT APPLICATION

(11) **EP 2 199 113 A1**
(43) Date of publication of application: **23.06.2010**
(21) Application number: 08171849.6
(22) Date of filing: 16.12.2008
(51) Int. Cl.: B60C 11/16

(54) **Stud pin assembly and retractable stud for a tire**

(30) Priority: 16.12.2008 US 18197 P
(71) Applicant: The Goodyear Tire & Rubber Company, Akron, OH 44316-0001 (US)
(72) Inventor: Cuny, Andre, B-6720 Habay-la-Neuve (BE); Severens, Frank, B-6700 Frassem-Arlon (BE); Collette, Jean Joseph, B-6700 Arlon (BE)
(74) Representative: Kutsch, Bernd

(57) **Abstract**

A stud pin assembly comprising a stud pin (22), a reservoir (50) comprising a thermally expandable material, and a spring element (56) is disposed. The stud pin assembly (20) is configured such that the reservoir (50) interacts with the spring element (56) and the spring element (56) effects a movement of the stud pin (22) when ambient temperature changes. Also, a tire comprising such a stud pin assembly (20) is described.

## Description

### Field of the Invention

The invention relates in general to pneumatic tires for vehicles having studs for traction.

### Background of the Invention

It is known in the prior art to provide tires with studs. Prior art tire studs provided excellent traction during severe driving conditions, particularly in heavy snow. However, prior art tire studs were not retractable and often caused damage to roads in normal driving conditions. Many states have outlawed their usage due to the road damage. Thus, it is desired to provide an improved tire that has retractable tire studs capable of providing excellent traction in severe driving conditions while being retractable to prevent damage to roadways in normal driving conditions.

### Summary

The invention relates to a stud pin assembly according to claim 1, a pneumatic tire according to claim 11 and a method according to claim 14.

Dependent claims refer to preferred embodiments of the invention.

In one aspect of the invention, the pneumatic tire comprises a tread, the tread having a non-skid depth (NSK), the tread including one or more ribs and circumferential grooves interposed between the ribs, wherein the tire includes one or more retractable stud pin assemblies, wherein the one or more stud pin assemblies include a fluid reservoir in cooperation with a spring, wherein a stud pin is mounted to said spring, and wherein the change in ambient temperature raises and lowers the stud pin relative to the tread outer surface.

Preferably, the assembly includes a reservoir including a liquid compartment and a elastomer compartment, wherein the spring is separated from the liquid compartment by the elastomer.

Preferably, the stud pin assembly includes an elastomer compartment.

Preferably, the elastomer is silicone.

Preferably, the stud pin assembly comprises an adjustable pin which is positioned to extend into the fluid compartment.

Preferably, the spring further includes a threaded member and the one or more stud pins are threaded onto the threaded member.

In a further aspect of the invention, the pneumatic tire comprises a tread, the tread having a non-skid depth (NSK), the tread including one or more ribs and circumferential grooves interposed between the ribs, wherein the tire includes one or more retractable stud pin assemblies, wherein the one or more stud pin assemblies include a housing having an elastomer compartment in mechanical cooperation with a first spring for movement in a first direction, wherein the stud pin is mounted to the first spring, the housing further including a second compression spring having movement in second direction, and an adjustable nut assembly in mechanical cooperation with the compression spring.

Preferably, the housing further includes a liquid compartment.

Preferably, the housing further includes a liquid compartment and an adjustment screw in communication with the liquid compartment.

### Definitions

"Axial" and "axially" mean the lines or directions that are parallel to the axis of rotation of the tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a partial top view of a first embodiment of a retractable stud assembly of the present invention shown installed in a portion of a tire tread;
FIG. 2 is a cross-sectional view in the direction A-A of FIG. 1;

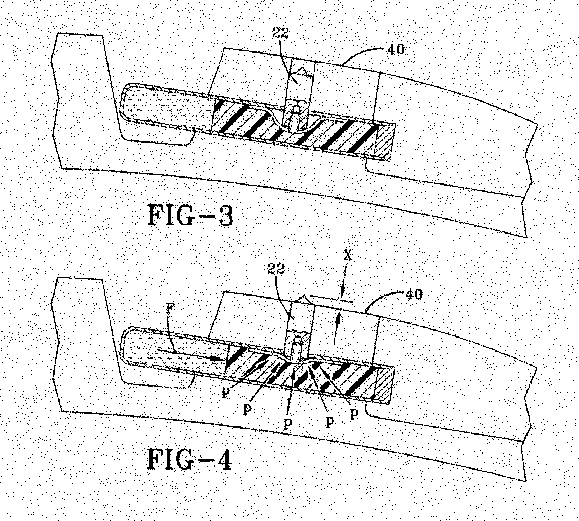

FIG. 3 illustrates the retractable stud with temperatures over 0 degrees;
FIG. 4 illustrates the retractable stud with temperatures below 0 degrees;
FIGS. 5-7 illustrate assembly of the retractable stud into a tire tread;
Fig. 8 illustrates the stud with respect to the external surface of the tread at different ambient temperatures;
FIGS 9 and 10 illustrate a tread bridge assembly;
FIG. 11 illustrates the assembly of Fig. 1 shown in a worn tire;
FIG. 12 illustrates a second embodiment of a retractable stud assembly having a manually adjustable retractable stud assembly;
FIG. 13 is a partial top view of a third embodiment of a retractable stud assembly of the present invention shown installed in a portion of a tire tread;
FIG. 14 is a cross-sectional view in the direction A-A of FIG. 13; and
FIG. 15 illustrates the springs characteristics;
FIG. 16 is a cross-sectional view in the direction A-A of FIG. 17;
Fig. 17 is a partial top view of a fourth embodiment of a retractable stud assembly of the present invention shown installed in a portion of a tire tread;
FIG. 18 is a cross-sectional view in the direction A-A of FIG. 19;
Fig. 19 is a partial top view of a fifth embodiment of a retractable stud assembly of the present invention shown installed in a portion of a tire tread.

### Detailed Description of the Invention

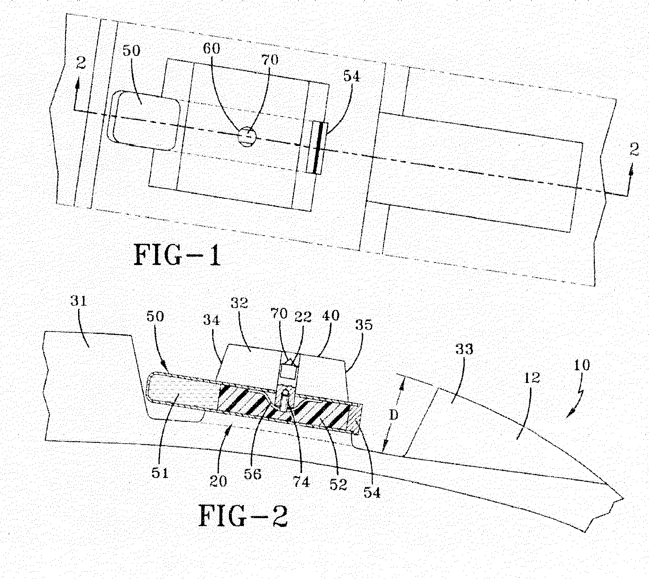

Figures 1 and 2 illustrate a first embodiment of a retractable stud, suitable for use in pneumatic tires such as passenger or truck tires where enhanced traction may be desired. A partial view of a portion of a tire 10 is shown in Figures 1 and 2. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35. The 12 tread may also comprise optional sipes (not shown).

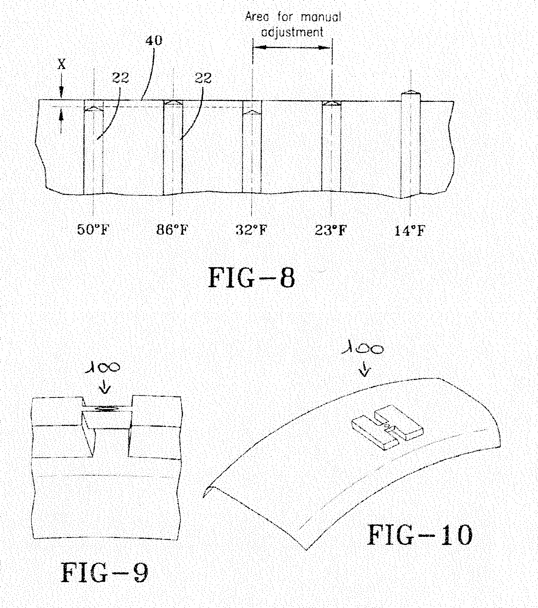

The tire 10 further comprises one or more retractable stud assemblies 20 which are mountable in the tire tread. The retractable stud assembly 20 is self adjusting, and its principle of operation is based upon the physical expansion and contraction properties of fluid such as water. For example as shown in Figure 8, if the air ambient temperature is about 10 degrees C, and water is utilized as part of the actuating mechanism, the stud pin 22 is located below the external surface 40 of the tire. As the temperature gets colder the water freezes and expands, the stud pin 22 raises radially outwards due to the expansion of a water bladder in cooperation with the stud pin, as described in more detail, below. At -10 degrees C, the stud pin 22 is fully actuated. The stud pin of the invention also provides for manual actuation of the stud pin.

The retractable stud pin assembly 20 includes a reservoir housing 50 that is preferably encased in a hard outer casing such as steel. The reservoir houses a fluid 51 that may be liquid or gas, but is preferably water. The reservoir 50 further houses an elastomer material 52 that is located adjacent the fluid 51. The elastomer material preferably acts to constrain the fluid 51 in one end of the reservoir. The elastomer material may be silicone, rubber or other flexible material. The reservoir further comprises a cap 54 to enclose the reservoir. The reservoir 50 further comprises a spring 56 that preferably has a curved cross-section. Preferably, the spring 56 has a bottom portion 57 with a threaded male member 58 projecting therefrom. Preferably the spring has a U shaped bottom with the threaded male member mounted in the center of the bottom portion and mounted to be orthogonal with respect to the plane of the bottom portion. The threaded male member 58 is positioned to align with a hole 60 in the reservoir 50.

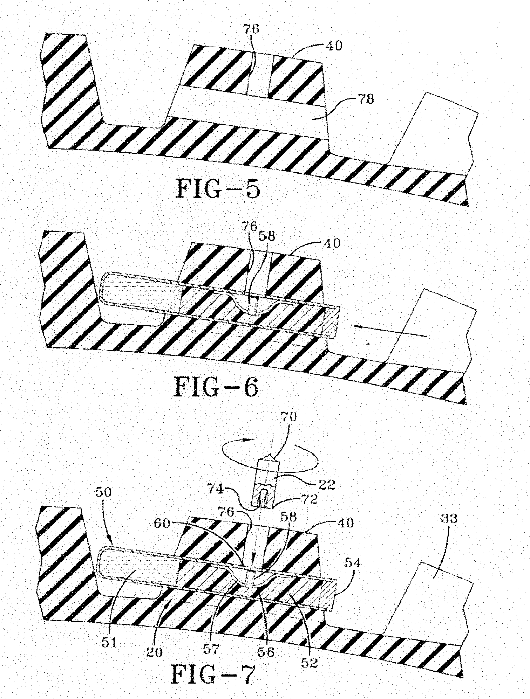

The stud pin 20 has a first end 70 that may be any desired shape, and a second end 72 that has an inner threaded hole 74 for reception on threaded male member 58. Thus, the stud pin 20 may be actuated by the reservoir assembly to raise and lower in hole 76 of tread 12. The stud pin assembly 20 may be mounted in tire tread 12 after the tire has been manufactured. The tire tread 12 has a groove 78 formed in a first direction of the tread block 12 with a groove 76 that intersects groove 78 in a second direction. See e.g., Figure 5. For example, the first groove may have a longitudinal axis that extends in an axial direction and a second groove that extends in a radial direction. Prior to insertion into the groove 78, the reservoir casing is filled with fluid such as water, and then the elastomer material 52, the spring with threaded member, and the end cap 54 is inserted. The assembly is then inserted into groove 78 as shown in Figure 6. The threaded member is aligned with groove 76. The stud pin 22 is then inserted into groove 76 so that the threaded end 72 is positioned radially inward and aligned for reception onto male threaded member 58 as shown in Figure 7. The stud pin is then screwed onto the male member 58. The stud pin height may vary as desired, and the stud pins may be changed out or replaced manually.

The retractable pin assembly 20 may also be installed in a bridge 100 of a tire tread that spans between and across two adjacent tread blocks, as shown in Figures 9 and 10. The reservoir 50 is mounted in the groove formed underneath the rubber bridge 100 and extends in an axial direction in the groove between the two tread blocks in this example.

Operation of the assembly may now be described. The fluid compartment end of reservoir of the retractable pin assembly is preferably located in a groove such that it is external to the tire in order to sense the ambient temperature. As the temperature cools, the water or fluid in the reservoir expands, exerting an axial force on the elastomer member 52. As the elastomer member 52 is compressed, it exerts pressure on spring 56. As the pressure on spring 56 increases, it pushes the stud up through the groove 76 and past the external surface 40 of the tire. As the temperature increases, the stud retracts into the groove 76.

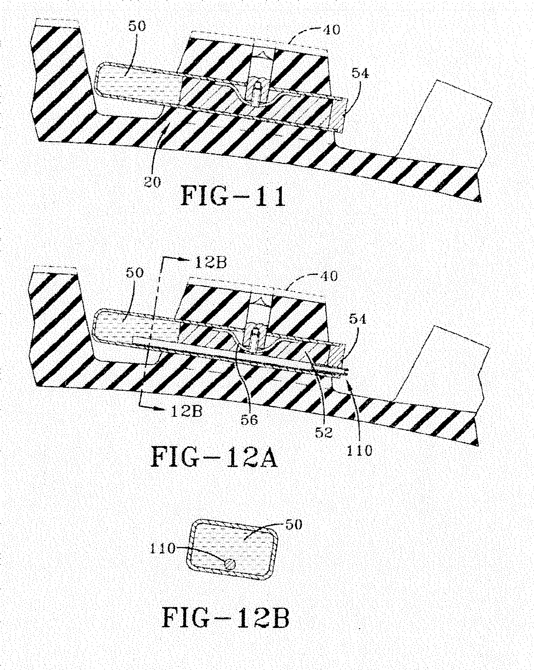

Figure 11 illustrates the retractable stud assembly as the tire wears. As the tire wears, the external surface 40 of the tire moves radially inward, approaching the height of the stud pin. One solution may be to change out the stud pins to shorter pins. Another solution is to provide an manual adjustment mechanism as shown in Figure 12a and 12b. An adjustment pin 110 is inserted into the reservoir and extends under the elastomer into the fluid portion. As the adjustment pin 110 is inserted into the fluid portion of the reservoir, the volume of the pin acts to effectively increase the fluid volume, and decrease the pin height. Thus, the pin acts as an adjustable volume displacement device to fine tune the pin height. The adjustable pins may be used to manually actuate the pins of the studs are not at a sufficient height.

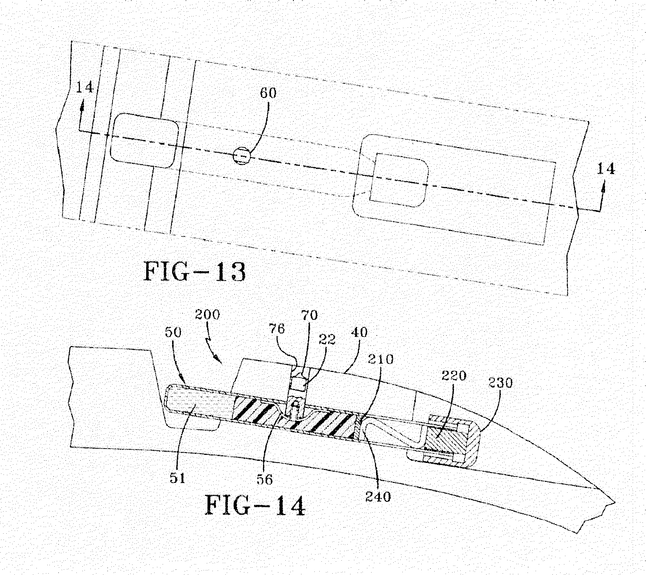

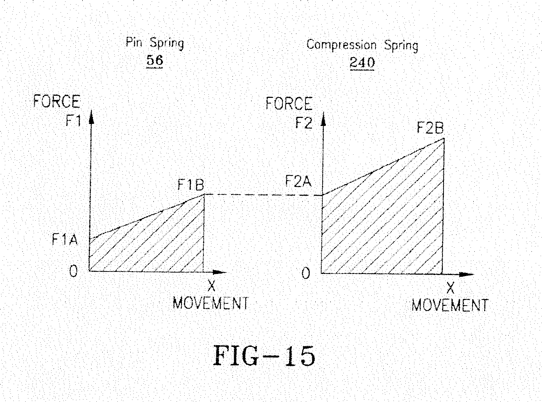

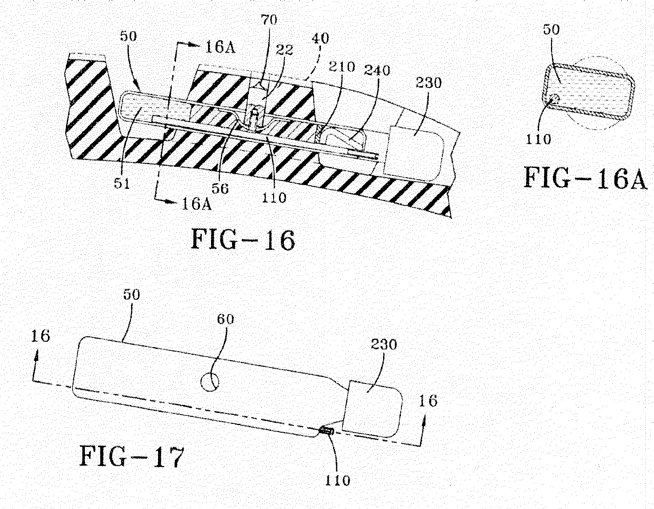

Figure 13 illustrates a third embodiment of a retractable stud assembly 200. The third embodiment is the same as described above (with or without the adjustable pin), except for the following differences. End cap 54 has been removed and replaced with washers 210, 220. An adjustable nut 230 is secured to the reservoir end to enclose the assembly. A compression spring 240 is located between the first and second washer 210,220. As shown in Fig. 15, the minimum force of compression of the compression spring 240 must be higher than the maximum compression force of spring 56. The compression spring provides improved flexibility of the pins on the road. Further, the embodiment may further include the adjustable pin to increase or decrease fluid volume. Still further yet, the adjustable nut 230 may be utilized as an adjustment mechanism, either alone or together with adjustment pin. Figure 13 illustrates the assembly without an adjustable pin 110, while Figure 16 illustrates the third embodiment with the adjustable pin 110. If the temperature increases, the adjustable nut 230 may be unscrewed. As the nut is unscrewed, its movement decreases compression spring force which lowers the stud pin in the groove. If it is desired to actuate the pins, the adjustable nut 230 can be screwed in to increase compression force, and thereby raise the pins.

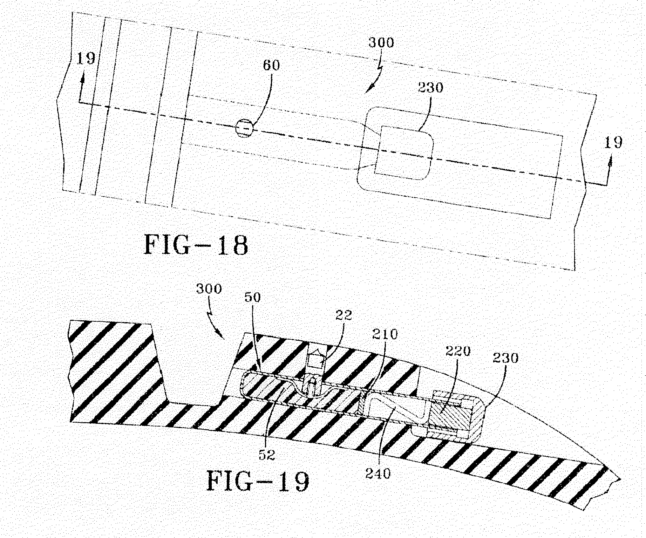

Figures 18 and 19 illustrate a fourth embodiment of the invention. The fourth embodiment comprises a stud assembly 300 and is the same as described above except for the following differences. The fluid 51 in reservoir 50 and adjustable pin 110 have been removed. The retractable stud pins are manually actuated by adjustable nut 230.

## Claims

1. A stud pin assembly comprising a stud pin (22), a reservoir (50) comprising a thermally expandable material, and a spring element (56), wherein the stud pin assembly (20) is configured such that the reservoir (50) interacts with the spring element (56) and the spring element (56) effects a movement of the stud pin (22) when ambient temperature changes.

2. The stud pin assembly of claim 1 wherein the stud pin (22) is mounted to the spring element (56), preferably removably mounted to or screwed together with the spring element (56); or wherein the spring element (56) includes or is connected to a threaded member (58) and wherein the stud pin (22) is threaded onto the threaded member (58).

3. The stud pin assembly of claim 1 or 2 wherein the thermally expandable material is a fluid (51), preferably water.

4. The stud pin assembly of at least one of the previous claims wherein the reservoir (50) includes a fluid compartment comprising a fluid (51), preferably water, and an elastomer compartment comprising an elastomer (52), preferably silicone.

5. The stud pin assembly of claim 4 wherein the spring element (56) is separated from the fluid compartment by the elastomer compartment.

6. The stud pin assembly of at least one of the previous claims further comprising an adjustment means (110, 240) for adjusting an initial setting of the stud pin (22) at a given ambient temperature.

7. The stud pin assembly of claim 6 wherein the adjustment means is an adjustment pin (110) or an adjustment screw which extends into the reservoir (50), preferably into the fluid compartment of the reservoir (50), and wherein the extend to which the adjustment pin (110) or the adjustment screw extends into the reservoir (50) can be varied.

8. The stud pin assembly of claim 6 wherein the adjustment means comprises a second spring element, preferably a compression spring (240), which is configured to interact with the reservoir (50), preferably with the elastomer compartment of the reservoir (50), to effect a movement of the stud pin (22) for adjusting an initial setting of the stud pin (22) at a given ambient temperature.

9. The stud pin assembly of at least one of the previous claims 6 to 8 wherein the stud pin assembly (20) comprises an adjustable nut assembly (230) in mechanical interaction with the adjustment means (110, 240), preferably with the second spring element.

10. The stud pin assembly of at least one of the previous claims wherein the reservoir (50), the spring element (56) and optionally also the adjustment means (110, 240) are located in a common housing.

11. A pneumatic tire comprising a tread (12) having a non-skid depth (NSK) wherein the tread (12) includes one more stud pin assemblies (20) according to one of the previous claims.

12. The pneumatic tire of claim 11 wherein the stud pin assemblies (20) are located in the tread (12) such that a change in ambient temperature raises and lowers the stud pins (22) relative to the tread outer running surface.

13. The pneumatic tire of 11 or 12 further comprising one or more rubber tread elements and grooves interposed between the rubber tread elements, wherein the stud assemblies (20) are at least partially located in the rubber tread elements.

14. A method of mounting a stud pin assembly to a tire tread, the method comprising:
providing a tire tread comprising a rubber tread element comprising a first groove (78) that extends at least substantially parallel to a running surface of the tire tread (12) within the rubber tread element and comprising a second groove (76) that extends at least substantially perpendicular to the running surface of the tire tread (12) within the rubber tread element, wherein the first groove (78) intersects the second groove (76);
inserting a stud pin assembly (20) according to one of the previous claims, but with an unmounted or not yet mounted stud pin, at least partially into the first groove;
inserting a stud pin (22) at least partially into the second groove (76);
and mounting, preferably screwing, the stud pin (22) inserted into the second groove (76) to the stud pin assembly (20) with the unmounted or not yet mounted stud pin inserted into the first groove (78).
